# EUROPEAN PATENT APPLICATION

(11) **EP 3 620 478 A1**
(43) Date of publication of application: **11.03.2020**
(21) Application number: 18193336.7
(22) Date of filing: 10.09.2018
(51) Int. Cl.: C08G 18/66, C08G 18/73, C08G 18/76, C08G 18/10, C08G 18/32, C08G 18/44

(54) **USE OF THERMOPLASTIC POLYURETHANES FOR APPLICATIONS SUBJECT TO SIGNIFICANT EVERYDAY STRESS**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to specific thermoplastic polyurethane moulding compounds having improved resistance to mechanical stress, especially scratching, and improved resistance to soiling by standard household chemicals and coloured foodstuffs and having very little blocking of electronic and radio signals.

## Description

The present invention relates to the use of specific thermoplastic polyurethane moulding compounds having improved resistance to mechanical stress, especially scratching, and improved resistance to soiling by standard household chemicals and coloured foodstuffs as well as having little or no blocking of radio and electrical signals.

Thermoplastic polyurethanes (TPUs) are of great industrial importance because of their good mechanical properties and thermoplastic processibility. There is an overview of the production, properties and applications of TPUs, for example, in Kunststoff Handbuch [Plastics Handbook] [G. Becker, D. Braun], volume 7 "Polyurethane" [Polyurethanes], Munich, Vienna, Carl Hanser Verlag, 1983.

TPUs are usually formed from linear polyols (macrodiols), for example polyester diols, polyether diols or polycarbonate diols, organic diisocyanates and short-chain, usually difunctional alcohols (chain extenders). The TPUs may be produced in continuous or batchwise fashion. The best-known production processes are the belt process (GB-A 1 057 018) and the extruder process (DE-A 19 64 834).

The thermoplastic polyurethanes can be synthesized either stepwise (prepolymer metering method) or by simultaneous reaction of all reactive components (one-shot metering method).

In the case of use of TPUs for everyday articles in the sports and leisure, transport and home sector, for example housings and shells, electronic appliances, for example mobile phones, tablets, notebooks, computers or wristbands of watches, especially fitness watches and what are called wearables, but also for installable components and seat surfaces, there is frequently mechanical stress on the plastic. This occurs, for example, when mobile phones are frequently put into trouser pockets and taken out again. Plastic surfaces of seats are likewise subject to significant mechanical stresses. There can be scratching of the plastics surface here, and also soiling of the plastics surface by dye particles from clothing in the case of coloured items of clothing, for example blue jeans material. In addition, the articles having plastic surfaces or made of plastic that are in everyday use can come into contact with domestic chemicals, for example vinegar, ethanol, acetone, isopropanol, oils and fats, for example suncream, makeup, hand cream, and with coloured foodstuffs, for example mustard, cola, coffee, ketchup, mayonnaise, olive oil, and should ideally not be chemically attacked by these substances or else take on a corresponding colour. This has not been the case to a sufficient degree to date for conventional TPUs. Nevertheless, TPUs are very sought-after for applications in everyday use, especially owing to their pleasant properties, for example tactile properties, skin compatibility and flexibility, combined with very good mechanical properties and high wear resistance.

Furthermore, in applications involving reception and/or transmission of electrical and radio signals (e.g. GPS, WLAN, Bluetooth) it is important that the TPU and the article made of the TPU provide as little signal blocking as possible, preferably in casings or cases of mobile phones, tablets, notebooks, computers, fitness or smart watches, etc.

The problem addressed by the present invention was therefore that of providing specific thermoplastic polyurethanes for the production of articles for everyday use, which have a distinct improvement in resistance to mechanical stress and to soiling and at the same time a very low blocking of electrical signals and radio signals (e.g. GPS, WLAN, Bluetooth) by comparison with existing TPUs. In addition, the other good properties of thermoplastic polyurethanes, for example good thermal stability, pleasant feel and good processibility, high level of mechanical properties and very good wear resistance, should be maintained.

This problem was solved by the provision and use of TPUs based on specific polycarbonate polyols for production of everyday articles.

TPUs based on polycarbonate polyols are known per se and are used mainly for industrial applications (DE-C 4203307, US-A 2001053841, US-A 6166135, EP-A 1288241, WO-A 2004/029122, EP-A 2213696, WO-A 2013190118, WO-A 2013191902, WO-A 2015090952).

WO-A 2017036642 describes watch bands made from a fluorinated polymer comprising recurring units derived from at least one hydroxyl-terminated perfluoropolyether polymer. F-TPU 6 in Table 1 describes a TPU based on 75 mol-% of a polycarbonate diol with a molecular weight of 2000 g/mol and 25 mol-% of a perfluoropolyetherdiol with a molecular weight of 1700 g/mol. This TPU has a very low tensile strength of only 13MPa which is not acceptable for TPU applications. Furthermore, no blue denim tests nor stain tests are disclosed or mentioned and no respective test data are available for F-TPU 6. There are no hints that TPUs based on polycarbonate polyols have very little signal blocking of electrical signals and radio signals and that the TPUs are particularly resistant to soiling and scratching in the everyday use of consumer articles produced therefrom.

It has been found that, surprisingly, specific TPUs based on polycarbonate diols have very little signal blocking of electrical signals and radio signals (e.g. GPS, WLAN, Bluetooth) and furthermore very good resistance to soiling, surface discolouration and scratching and are therefore particularly suitable for use in everyday consumer articles, especially in electronical sectors and in sports and leisure, transportation and home sectors. For example, there are frequently mechanical stresses on the plastic surface and soiling on the surface of the plastic in housings and shells of mobile phones, tablets, notebooks, computers or on wristbands and housings of watches, especially fitness watches and wearables, but also on installable components and on seat surfaces. Electronic devices. such as mobile phones, tablets, notebooks, computers, smart watches or fitness watches use electronic and radio signals, which should not be blocked by the TPU article or as little as possible.

The present invention therefore provides for the use of thermoplastic polyurethanes obtainable from the reaction of
A) at least one isocyanate component selected from the group consisting of aliphatic, cycloaliphatic and aromatic diisocyanates,
B) a polyol component consisting of
   b1) 100 to 70 mol% of one or more polycarbonate diols having a number average molecular weight of 500 to 6000 g/mol,
   b2) 0 to 30 mol% of at least one polyol selected from the group consisting of polyester diols, polyether diols, polycaprolactone diols and polyether carbonate diols having a number-average molecular weight of 500 to 8000 g/mol and
C) at least one chain extender component selected from the group consisting of short-chain diols, hydroxylamines and diamines having number-average molecular weights of 62 to 490 g/mol,
D) optionally monofunctional chain terminators,
   in the presence of
E) optionally catalysts,
F) 0.05% to 5% by weight, based on the thermoplastic polyurethane, of oxidation and light stabilizers,
G) optionally further additives and/or auxiliaries,
   where the ratio of the isocyanate groups from A) to the isocyanate-reactive groups from B), C) and D) is 0.9:1 to 1.1:1,
   for production of articles that are subject to soiling and scratching by virtue of their everyday use and that have very little blocking of electronic signals and radio signals.

Useful organic **diisocyanates A**) include, for example, diisocyanates as described in Justus Liebigs Annalen der Chemie, 562, pp.75-136*.*

Specific examples include:
Aliphatic and cycloaliphatic diisocyanates, for example 1,6-diisocyanatohexane, 1,8-diisocyanatooctane, isophorone diisocyanate, cyclohexane 1,4-diisocyanate, 1-methylcyclohexane 2,4-diisocyanate and 1-methylcyclohexane 2,6-diisocyanate and also the corresponding isomer mixtures and dicyclohexylmethane 4,4'-, 2,4'- and 2,2'-diisocyanate, and the corresponding isomer mixtures. Preference is given to using 1,6-diisocyanatohexane as aliphatic diisocyanate.

Aromatic diisocyanates such as tolylene 2,4-diisocyanate, mixtures of tolylene 2,4-diisocyanate and tolylene 2,6-diisocyanate, diphenylmethane 4,4'-diisocyanate, diphenylmethane 2,4'-diisocyanate and diphenylmethane 2,2'-diisocyanate, mixtures of diphenylmethane 2,4'-diisocyanate and diphenylmethane 4,4'-diisocyanate, urethane-modified liquid diphenylmethane 4,4'-diisocyanates and diphenylmethane 2,4'-diisocyanates, 4,4'-diisocyanato-1,2-diphenylethane and naphthylene 1,5-diisocyanate. Preference is given to using diphenylmethane diisocyanate isomer mixtures having a diphenylmethane 4,4'-diisocyanate content of >96% by weight and in particular diphenylmethane 4,4'-diisocyanate as aromatic organic diisocyanates.

The diisocyanates mentioned can be employed individually or in the form of mixtures with one another. They can also be used together with up to 15% by weight (based on the total amount of diisocyanate) of a polyisocyanate, for example triphenylmethane 4,4',4"-triisocyanate or polyphenylpolymethylene polyisocyanates.

Particularly preferred organic diisocyanates A) are 1,6-diisocyanatohexane, diphenylmethane 4,4'-diisocyanate, dicyclohexylmethane 4,4'-diisocyanate and mixtures of these diisocyanates.

**Components b1**) used include linear polycarbonate diols having a number-average molecular weight Mₙ 500 to 6000 g/mol, preferably of 500 to 5000 g/mol, more preferably of 600 to 4000 g/mol, especially preferably 600 to 3500 g/mol, very especially preferably 650 to 2500 g/mol and very preferably 800 to 2500 g/mol. For production reasons, these often contain small amounts of nonlinear compounds. They are therefore frequently also referred to as "substantially linear polyols". Preference is given to polycarbonate diols based on butane-1,4-diol, pentane-1,5-diol, 3-methylpentane-1,5-diol, hexane-1,6-diol and mixtures of these diols.

Suitable polycarbonate diols may be produced for example by reaction of short-chain diols, for example butane-1,4-diol and/or hexane-1,6-diol, with diphenyl carbonate or dimethyl carbonate with the assistance of catalysts and with elimination of phenol or methanol.

**Components b2**) used include polyester diols, polyether diols, polycaprolactone diols and polyether carbonate diols each having number-average molecular weights of 500 to 8000 g/mol, preferably 500 to 6000 g/mol, preferably 500-4000 g/mol, more preferably 650-2500 g/mol. Preferably, these polyols are used in amounts of 0 to 30 mol%, preferably 0 to 20 mol%, more preferably 0-10 mol%, based on the amount of polyol component B).

Suitable polyether diols may be produced by reacting one or more alkylene oxides having from 2 to 4 carbon atoms in the alkylene radical with a starter molecule containing two active hydrogen atoms in bound form. Examples of alkylene oxides include: ethylene oxide, 1,2-propylene oxide, epichlorohydrin, 1,2-butylene oxide and 2,3-butylene oxide. Preference is given to using ethylene oxide, propylene oxide and mixtures of 1,2-propylene oxide and ethylene oxide. The alkylene oxides can be used individually, alternately in succession or as mixtures. Possible starter molecules are, for example: water, amino alcohols such as N-alkyldiethanolamines, for example N-methyldiethanolamine, and diols such as ethylene glycol, 1,3-propylene glycol, butane-1,4-diol and hexane-1,6-diol. Mixtures of starter molecules may optionally also be used. Suitable polyether diols further include the hydroxyl-containing polymerization products of tetrahydrofuran. It is also possible to use trifunctional polyether polyols in proportions of 0% to 30% by weight based on the bifunctional polyether polyols, but at most in an amount such that a thermoplastically processible product is formed. Suitable polyether diols have a number average molecular weight Mₙ of from 500 to 8000 g/mol, preferably from 750 to 6000 g/mol and very particularly preferably from 1000 to 4200 g/mol. They may be used either individually or in the form of mixtures with one another.

Suitable polyester diols can be prepared, for example, from dicarboxylic acids having from 2 to 12 carbon atoms, preferably from 4 to 6 carbon atoms, and polyhydric alcohols. Examples of useful dicarboxylic acids include: aliphatic dicarboxylic acids such as succinic acid, maleic acid, glutaric acid, adipic acid, suberic acid, azelaic acid and sebacic acid, and aromatic dicarboxylic acids such as phthalic acid, isophthalic acid and terephthalic acid. The dicarboxylic acids may be used individually or as mixtures, for example in the form of a succinic acid, glutaric acid and adipic acid mixture. To produce the polyester diols, it may be advantageous to use the corresponding dicarboxylic acid derivatives such as carboxylic diesters having from 1 to 4 carbon atoms in the alcohol radical, carboxylic anhydrides or carboxylic acid chlorides instead of the dicarboxylic acids. Examples of polyhydric alcohols are glycols having 2 to 10 and preferably 2 to 6 carbon atoms, such as ethylene glycol, diethylene glycol, butane-1,4-diol, pentane-1,5-diol, hexane-1,6-diol, decane-1,10-diol, dodecane-1,12-diol, 2,2-dimethylpropane-1,3-diol, propane-1,3-diol and dipropylene glycol. According to the desired properties, the polyhydric alcohols may be used alone or optionally in a mixture with one another. Also suitable are condensation products of hydroxycarboxylic acids, for example hydroxycaproic acid, and polymerization products of cyclic lactones, for example optionally substituted caprolactones. Polyester diols used with preference are ethanediol polyadipates, butane-1,4-diol polyadipates, ethanediol-butane-1,4-diol polyadipates, hexane-1,6-diol-neopentyl glycol polyadipates, hexane-1,6-diol-butane-1,4-diol polyadipates and polycaprolactones. The polyester diols have a number-average molecular weight Mₙ of 500 to 8000 g/mol, preferably 600 to 6000 g/mol and more preferably 800 to 3000 g/mol and may be employed singly or in the form of mixtures with one another.

Suitable polyether carbonate diols can be prepared, for example, by reaction of short-chain polyether diols such as polytetrahydrofurans having molecular weights of 250 to 1000 g/mol with diphenyl or dimethyl carbonate with the assistance of catalysts and with elimination of phenol or methanol. Furthermore, polyether carbonate diols can be prepared by copolymerization of alkylene oxides, e.g. ethylene oxide or propylene oxide or mixtures thereof, with carbon dioxide with the assistance of suitable catalysts, e.g. double metal cyanide catalysts. The polyether carbonate diols have a number-average molecular weight of 500 to 8000 g/mol, preferably 750 to 6000 g/mol and more preferably 1000 to 4200 g/mol.

All the above mentioned polyols may additionally also have been reacted with ε-caprolactone at the respective OH groups.

All the above mentioned polyols may additionally also have been reacted with ethylene oxide at the respective OH groups.

**Chain extenders** C) used may be low molecular weight compounds having a molecular weight of ≥ 62 and ≤ 490 g/mol, preferably ≥ 62 and ≤ 400 g/mol, more preferably ≥ 62 and ≤ 350 g/mol, preferably 80 to 300 g/mol, even more preferably 90 to 200 g/mol and very preferably 90 to 118 g/mol, and having two isocyanate-reactive groups.

The chain extenders C) are preferably diols, diamines or diol/diamine mixtures, more preferably diols.

Suitable chain extenders are diols such as for example ethanediol, propane-1,3-diol, butane-1,4-diol, pentane-1,5-diol, hexane-1,6-diol, octane-1,8-diol, decane-1,10-diol, dodecane-1,12-diol, diethylene glycol, dipropylene glycol, neopentyl glycol, diesters of terephthalic acid with glycols having 2 to 4 carbon atoms, for example bis(ethylene glycol) terephthalate or bis(butane-1,4-diol) terephthalate, hydroxyalkylene ethers of hydroquinone, for example 1,4-di(hydroxyethyl)hydroquinone, and ethoxylated bisphenols.

Particularly preferred chain extenders are aliphatic diols having 2 to 14 carbon atoms, for example ethanediol, propane-1,3-diol, butane-1,4-diol, pentane-1,5-diol, hexane-1,6-diol, octane-1,8-diol, decane-1,10-diol, dodecane-1,12-diol, diethylene glycol, dipropylene glycol, neopentyl glycol and 1,4-di(hydroxyethyl)hydroquinone. Of these compounds mentioned, particularly preferred chain extenders are ethanediol, propane-1,3-diol, butane-1,4-diol, hexane-1,6-diol and 1,4-di(hydroxyethyl)hydroquinone.

Suitable chain extenders are also (cyclo)aliphatic diamines, for example isophoronediamine, ethylenediamine, propylene-1,2-diamine, propylene-1,3-diamine, N-methylpropylene-1,3-diamine, N,N'-dimethylethylenediamine and aromatic diamines, for example tolylene-2,4-diamine and tolylene-2,6-diamine, 3,5-diethyltolylene-2,4-diamine and 3,5-diethyltolylene-2,6-diamine and primary mono-, di-, tri- or tetraalkyl-substituted 4,4'-diaminodiphenylmethanes.

In addition, it is also possible to add relatively small amounts of triols.

Suitable **catalysts E**) for preparing the TPUs are the customary tertiary amines known from the prior art, for example triethylamine, dimethylcyclohexylamine, N-methylmorpholine, N,N'-dimethylpiperazine, 2-(dimethylaminoethoxy)ethanol, diazabicyclo[2.2.2]octane, and also organic metal compounds, such as titanic acid esters, iron compounds or tin compounds, for example tin diacetate, tin dioctoate, tin dilaurate or the dialkyltin salts of aliphatic carboxylic acids, for example dibutyltin diacetate or dibutyltin dilaurate. Preferred catalysts are organic metal compounds, in particular esters of titanic acid, or iron compounds and tin compounds.

The total amount of catalysts based on the TPU is generally about 0% to 5% by weight, preferably 0.0001% to 2% by weight and more preferably from 0.0002% to 1.0% by weight.

Suitable **oxidation stabilizers F**) are, for example, organic compounds having sterically hindered phenolic groups, for example Irganox® 1010 or Irganox® 245 (commercially available products of BASF SE), and organic phosphorus compounds comprising trivalent phosphorus, for example triphenylphosphine and triphenyl phosphite.

Suitable **light stabilizers F**) are, for example, UV absorbers such as benzophenones, benzotriazoles, oxanilides or phenyltriazines, and also what are called HALS compounds (Hindered Amine Light Stabilizers), for example 2,2,6,6-tetramethylpiperidine derivatives, such as Tinuvin® 622, Tinuvin® 765 and Chimassorb® 2020 (commercially available products from BASF SE).

Suitable **additives and auxiliaries G**) are for example lubricants, such as fatty acid esters, metal soaps thereof, fatty acid amides, fatty acid ester amides and silicone compounds, antiblocking agents, inhibitors, stabilizers against hydrolysis, heat and discoloration, flame retardants, dyes, pigments, inorganic and/or organic fillers and reinforcers. Reinforcing materials are, in particular, fibre-like reinforcing materials such as inorganic fibres which can be produced according to the prior art and also be treated with a size. In a particular embodiment of the invention OH-functional silicone compounds, for example OH-functional polydimethylsiloxanes, may be employed as component C) in an amount of up to 30 mol% based on the amount of polycarbonate diols B). Further details of the auxiliaries and additives mentioned can be found in the specialist literature, for example the monograph by J. H. Saunders and K. C. Frisch: "High Polymers", volume XVI, Polyurethane, parts 1 and 2, Interscience Publishers 1962 and 1964*,* Taschenbuch für Kunststoff-Additive [Handbook of Plastics Additives] by R. Gächter and H. Müller (Hanser Verlag Munich 1990), or DE 29 01 774 A.

Suitable **chain terminators D**) are, for example, monofunctional substances which can react with isocyanate groups, such as alcohols or amines, preference being given to alcohols. Mention may be made for example of 1-butanol, 1-hexanol, 1-octanol and stearyl alcohol.

Components F) and G) can be added during the TPU production process and/or in a subsequent compounding step.

Owing to their good properties with regard to resistance to scratching in everyday use and soiling by colouring substances, liquids, chemicals and foodstuffs, the thermoplastic polyurethanes are used for production of everyday articles, for example housings and shells of mobile phones, notebooks and tablets, and wristbands of watches, especially fitness watches, and wearables, installed components and seat surfaces in the transport and home sector, and in the sports and leisure sector.

The polyol component (B) used in the case of the inventive use of the thermoplastic polyurethanes preferably comprises
b1) 100 to 80 mol% of one or more polycarbonate diols having a number average molecular weight of 500 to 5000 g/mol and
b2) 0 to 20 mol% of at least one polyol selected from the group consisting of polyester diols, polyether diols, polycaprolactone diols and polyether carbonate diols having a number-average molecular weight of 500 to 6000 g/mol and
at least one chain extender component (C) selected from the group consisting of short-chain diols, hydroxylamines and/or diamines having a number-average molecular weight of 62 to 400 g/mol is used.

The polyol component (B) used in the case of the inventive use of the thermoplastic polyurethanes more preferably comprises
b1) 100 to 90 mol% of one or more polycarbonate diols having a number average molecular weight of 600 to 4000 g/mol and
b2) 0 to 10 mol% of at least one polyol selected from the group consisting of polyester diols, polyether diols, polycaprolactone diols and polyether carbonate diols having a number-average molecular weight of 500 to 4000 g/mol and
at least one chain extender component (C) selected from the group consisting of short-chain diols, hydroxylamines and diamines having a number-average molecular weight of 62 to 350 g/mol is used.

The polyol component (B) used in the case of the inventive use of the thermoplastic polyurethanes comprises
b1) 100 to 95 mol% of one or more polycarbonate diols having a number average molecular weight of 600 to 3500 g/mol and
b2) 0 to 5 mol% of at least one polyol selected from the group consisting of polyester diols, polyether diols, polycaprolactone diols and polyether carbonate diols having a number-average molecular weight of 650 to 2500 g/mol and
at least one chain extender component (C) selected from the group consisting of short-chain diols, hydroxylamines and diamines having a number-average molecular weight of 80 to 300 g/mol is used.

The polyol component (B) used in the case of the inventive use of the thermoplastic polyurethanes comprises
b1) one or more polycarbonate diols having a number-average molecular weight of 650 to 2500 g/mol and
at least one chain extender component (C) selected from the group consisting of short-chain diols having a number-average molecular weight of 90 to 200 g/mol is used.

The polyol component (B) used in the case of the inventive use of the thermoplastic polyurethanes more preferably comprises
b1) one or more polycarbonate diols having a number-average molecular weight of 800 to 2500 g/mol and
at least one chain extender component (C) selected from the group consisting of short-chain diols having a number-average molecular weight of 90 to 118 g/mol is used.

The invention is elucidated in detail with reference to the examples which follow.

### Examples:

Abbreviations used in the following:

### Polyols:

- Desmophen® C2201:: polycarbonate diol from Covestro AG having an OH number of 56 mg KOH/g
- Desmophen® C2100:: polycarbonate diol from Covestro AG having an OH number of 112 mg KOH/g
- Desmophen® C3100:: polycarbonate diol from Covestro AG having an OH number of 112 mg KOH/g
- Desmophen® C3200:: polycarbonate diol from Covestro AG having an OH number of 56 mg KOH/g
- Desmophen® XP2613:: polycarbonate diol from Covestro AG having an OH number of 56 mg KOH/g
- Desmophen® XP2716:: polycarbonate diol from Covestro AG having an OH number of 56 mg KOH/g
- T2000:: polytetrahydrofuran from BASF SE having an OH number of 56 mg KOH/g
- T1000:: polytetrahydrofuran from BASF SE having an OH number of 112 mg KOH/g
- Capa® 2201:: polycaprolactone from Perstorp having an OH number of 56 mg KOH/g
- PE225B:: polybutylene adipate having an OH number of 50 mg KOH/g
- PE90B:: polybutylene adipate having an OH number of 125 mg KOH/g
- BA1000:: polybutylene adipate having an OH number of 112 mg KOH/g
- BA2000:: polybutylene adipate having an OH number of 56 mg KOH/g
- Acclaim® 2200N:: polypropylene glycol from Covestro AG having an OH number of 56 mg KOH/g
- Acclaim® 2220N:: polypropylene polyethylene glycol from Covestro AG having an OH number of 50 mg KOH/g

### Diisocyanates:

- HDI:: 1,6-diisocyanatohexane
- MDI:: diphenylmethane 4,4'-diisocyanate

### Chain extenders:

- HDO:: hexane-1,6-diol
- BDO:: butane-1,4-diol
- HQEE:: hydroquinone bis(2-hydroxyethyl) ether

### Additives and auxiliaries:

- Irganox® 245:: antioxidant from BASF SE
- Irganox® 1010:: antioxidant from BASF SE
- Tinuvin® 622:: light stabilizer from BASF SE
- Tinuvin® 234:: light stabilizer from BASF SE
- Tinuvin® 622:: light stabilizer from BASF SE
- Stabaxol® P200:: hydrolysis stabilizer from Rhein Chemie GmbH
- Stabaxol® I:: hydrolysis stabilizer from Rhein Chemie GmbH

### General description of the preparation of the aliphatic TPUs:

A mixture of the respective polyol or polyol mixture (in the case of polyester polyols, 1% by weight of Stabaxol P200 was also added to the polyol before the start of the reaction), chain extender, Irganox 245 (0.7% by weight, based on TPU), Tinuvin 234 (0.8% by weight, based on TPU), Tinuvin 622 (0.4% by weight, based on TPU) and 80 ppm of dibutyltin dilaurate (based on the amount of polyol) was heated to 120°C while stirring. Thereafter, HDI was added in one portion. This was followed by stirring until the viscosity had risen to the maximum possible and then the TPU was poured out. The cast slab material thus obtained was subjected to thermal aftertreatment at 80°C for 30 minutes. Then it was cooled down to room temperature. The molar compositions of the TPUs prepared are shown in Table 1.

### General description of the preparation of the aromatic TPUs:

A mixture of the respective polyol or polyol mixture (in the case of polyester polyols, 1% by weight of Stabaxol I was also added to the polyol before the start of the reaction), Irganox 1010 (0.25% by weight, based on TPU), Tinuvin 234 (0.5% by weight, based on TPU), Tinuvin 622 (0.3% by weight, based on TPU) and 100 ppm of tin(II) dioctoate (based on the amount of polyol) was heated to 180°C while stirring. MDI preheated to 60°C was then added in one portion. The mixture was subsequently stirred for 30 seconds. The chain extender was then added and the mixture was subsequently stirred until the maximum possible viscosity increase had been achieved and the TPU was then poured out. The material was subjected to thermal aftertreatment at 80°C for 30 minutes. Then it was cooled down to room temperature. The molar compositions of the TPUs prepared are shown in Table 1 and in Table 3.

The cast TPU slabs obtained were cut and pelletized. The pellets were processed using an Arburg Allrounder 470S injection-moulding machine in a temperature range of 180° to 230°C and in a pressure range of 650 to 750 bar at an injection rate of 10 to 35 cm³/s to give bars (mould temperature: 40°C; bar size: 80 x 10 x 4 mm) or slabs (mould temperature: 40°C; size: 125 x 50 x 2 mm).

The mechanical properties (100% modulus, 300% modulus, breaking strength, elongation at break and Shore A hardness) and resistance to soiling and scratching were determined on the TPU products produced.

### Test conditions:

### 1) Hardness:

The measurement of the hardness was carried out in accordance with DIN 53505.

### 2) Tensile test:

The tensile test was carried out on S1 bars (corresponds to test specimens type 5 in accordance with EN ISO 527, stamped out from injection-moulded slabs) in accordance with DIN 53455 at a strain rate of 200 mm/min.

### 3) Soiling and scratch resistance:

The measurement of soiling and scratch resistance was effected with the aid of the Crockmeter 255A from James H. Heal&Co. Ltd. The friction finger was set to a stroke of 100 mm and the friction fabric used was original genes material from a new pair of dark blue jeans of the Levi's 501 brand. The 255A model is in accordance with B.S. 1006, AATCC Test method 8, ISO 105 and M & S. The test determines the proportion of the colour which is transferred by friction from the surface of a coloured textile material to another surface. For this purpose, an injection-moulded slab (length x width x thickness = 125 x 50 x 2 mm) of the respective TPU was clamped and rubbed against moist jeans fabric under controlled conditions. The 255A model works at a speed of 2 strokes (1 twin stroke) per second. An applied weight of 1000 g was chosen. After 500 twin strokes, the test was stopped and a visual assessment was conducted. It was assessed whether a blue colour or scratching is visible on the surface of the injection-moulded slab. If that was not the case, the test was continued with a further 500 twin strokes. This was repeated until visible colour or scratching was observed on the surface of the injection-moulded slab. This number of twin strokes was used to assess the soiling and scratch resistance.

Table 2 lists the mechanical properties and the results of the Crockmeter test with regard to resistance to soiling and scratching.

**Table 1:**

| Example | PE225B | Acclaim® 2220N | Acclaim® 2200N | T1000 | T2000 | Capa® 2201 | Desmophen® C2201 | Desmophen® C2100 | Desmophen® C3100 | Desmophen® C3200 | Desmophen® XP2613 | Desmophen® XP2716 | BDO | HDO | HQEE | HDI | MDI |
|---|---|---|---|---|---|---|---|---|---|---|---|---|---|---|---|---|---|
| 1* | 07 | 03 | | | | | | | | | | | | 2.035 | | 3035 | |
| 2* | 1 | | | | | | | | | | | | | 2035 | | 3 035 | |
| 3* | 1 | | | | | | | | | | | | 2.035 | | | 3.035 | |
| 4* | | | | 1 | | | | | | | | | | 2.035 | | 3 035 | |
| 5* | | | | | 1 | | | | | | | | | 2.035 | | 3035 | |
| 6* | | 1 | | | | | | | | | | | | 2035 | | 3.035 | |
| 7 | | | | | | | 1 | | | | | | 2.035 | | | 3.035 | |
| | | | | | | | 1 | | | | | | | 2.035 | | 3035 | |
| 9* | | | | | | 1 | | | | | | | 2.035 | | | 3 035 | |
| 10* | | | | | | 1 | | | | | | | | 2.035 | | 3.035 | |
| 11 | | | | | | | | 1 | | | | | 2.035 | | | 3.035 | |
| 12 | | | | | | | | 1 | | | | | 1.05 | | | 2.05 | |
| 13* | 1 | | | | | | | | | | | | 294 | | | | 3.94 |
| 14* | 1 | | | | | | | | | | | | | | 1.77 | | 2.77 |
| 15* | | | 1 | | | | | | | | | | 3.8 | | | | 4.8 |
| 16* | | | | 1 | | | | | | | | | 1.3 | | | | 23 |
| 17* | | | | | 1 | | | | | | | | 13 | | | | 23 |
| 18 | | | | | | | 1 | | | | | | 1.3 | | | | 2.3 |
| 19 | | | | | | | | 1 | | | | | 1.3 | | | | 23 |
| 20 | | | | | | | | | 1 | | | | 1.3 | | | | 2.3 |
| 21 | | | | | | | | | | 1 | | | 1.3 | | | | 2.3 |
| 22 | | | | | | | | | | | 1 | | 1.3 | | | | 2.3 |
| 23 | | | | | | | | | | | | 1 | 1.3 | | | | 23 |

| | | | | | | | | | | | | | | | | | |
|---|---|---|---|---|---|---|---|---|---|---|---|---|---|---|---|---|---|
| * non-inventive | | | | | | | | | | | | | | | | | |

**Table 2:**

| Example | Hardness | 100% modulus | 300% modulus | Breaking strength | Elongation at break | First visible discoloration after | First visible scratching after |
|---|---|---|---|---|---|---|---|
| | [Shore A] | [MPa] | [MPa] | [MPa] | [%] | [number of cycles] | [number of cycles] |
| 1* | 86 | 5.8 | 93 | 41.2 | 909 | 500 | 500 |
| 2* | 87 | 68 | 115 | 33.1 | 706 | 1000 | 1000 |
| 3* | 89 | 69 | 119 | 456 | 719 | 1000 | 500 |
| 4* | 94 | 12.5 | 183 | 34.3 | 560 | 1000 | 500 |
| 5* | 90 | 6.9 | 105 | 35.7 | 732 | 500 | 1000 |
| 6* | 84 | 53 | 7.4 | 21.1 | 959 | 1000 | 500 |
| 7 | 90 | 8.8 | 185 | 349 | 465 | 2000 | 2000 |
| 8 | 89 | 11.5 | 21.2 | 304 | 419 | 1500 | 1500 |
| 9* | 91 | 7.1 | 102 | 40.6 | 764 | 500 | 1000 |
| 10* | 89 | 61 | 84 | 295 | 825 | 1000 | 1000 |
| 11 | 93 | 24.6 | - | 254 | 117 | 5000 | 2500 |
| 12 | 92 | 12.7 | 21 | 21.4 | 312 | 1500 | 1500 |
| 13* | 87 | 6.1 | 148 | 49.7 | 602 | 500 | 500 |
| 14* | 85 | 6.4 | 155 | 478 | 598 | 500 | 500 |
| 15* | 88 | 8.2 | 137 | 30.1 | 599 | 500 | 500 |
| 16* | 88 | 64 | 109 | 42.6 | 644 | 500 | 500 |
| 17* | 72 | 29 | 53 | 28.2 | 820 | 1000 | 1000 |
| 18 | 74 | 39 | 16.2 | 44 5 | 473 | 2500 | 3500 |
| 19 | 76 | 53 | 37.1 | 46.6 | 341 | 5000 | 5000 |
| 20 | 75 | 49 | 37 | 46.1 | 324 | 5000 | 5000 |
| 21 | 75 | 4.1 | 9.9 | 429 | 498 | 2500 | 4000 |
| 22 | 76 | 48 | 134 | 463 | 405 | 5000 | 5000 |
| 23 | 77 | 109 | 32.6 | 36.2 | 311 | 5000 | 5000 |

| | | | | | | | |
|---|---|---|---|---|---|---|---|
| * non-inventive | | | | | | | |

### Assessment of the data and values ascertained:

The mechanical data and the number of cycles in the Crockmeter test for ascertaining the soiling and scratch resistance of the TPUs from Examples 1 to 23 (Table 2) show, for all the TPUs tested, a high level mechanical properties across the board, but distinct advantages are apparent for the TPUs based on polycarbonate diols in terms of soiling and scratch resistance by comparison with corresponding TPUs based on other diols (higher number of cycles in the Crockmeter test before the first visible colour or before the first visible scratching).

### 4) Signal blocking test

As specimen 2 mm flat plaques were used.

The dielectric constant or permittivity (according to Chinese standard GB/T5597) and the dissipation factor or loss tangent (according to the Chinese standard GB/T5597) were determined for TPU 24-30 (compositions and results see Table 3) with different hardness based on different polyols for 2.5 GHz and 5 GHz.

**Table 3:**

| | | | **Dielectric constant (Dk) or permittivity** | | **Dissipation factro (Df) or loss tangent** | |
|---|---|---|---|---|---|---|
| **Material** | **Molar composition of the TPU** | **Hardness** | 2.5 GHz | 5 GHz | 2.5 GHz | 5 GHz |
| TPU 24 | 1 Mol Desmophen® C2201, 3.3 Mol BDO, 4.3 Mol MDI | Shore A 90 | 2.787904 | 2.770441 | 0.0155 | 0.0136 |
| TPU 25* | 0.5 Mol Desmnphen® C2201, 0.5 Mol PE225B, 3.45 Mol BDO, 4.45 Mol MDI | Shore A 90 | 3.265621 | 3.209517 | 0.0513 | 0.0455 |
| TPU 26* | 1 Mol PE225B, 4 Mol BDO, 5 Mol MDI | Shore A 95 | 3.183997 | 3 122474 | 0.0582 | 00521 |
| TPU 27* | 1 Mol Capa® 2201, 4.3 Mol BDO, 5.3 Mol MDI | Shore A 95 | 3.22905 | 3.15869 | 0 0654 | 0.0583 |
| TPU 28* | 0.67 Mol BA1000, 0.33 Mol BA2000, 2 Mol BDO, 3 Mol MDI | Shore A 90 | 3.205621 | 3.13324 | 0.068 | 0.0607 |
| TPU 29* | 0.6 Mol PE225B, 0.4 Mol PE90B, 2.58 Mol HQEE, 3.58 Mol MDI | Shore A 95 | 3.249467 | 3.174586 | 0.0696 | 0.062 |
| TPU 30* | 1 Mol T2000, 1.27 Mol BDO, 2.27 Mol MDI | Shore A 70 | 3.130583 | 2.971599 | 01503 | 01318 |

| | | | | | | |
|---|---|---|---|---|---|---|
| *non-inventive | | | | | | |

As can be seen from Table 3 the inventive TPU 24 has the lowest values concerning dielectic constant and dissipation factor. The comparative TPU 25 - 30 have dielectric constant values and dissipation factors which are worse than the values of the TPU 24. The results show that TPU based on polycarbonate diols have very little signal blocking compared to TPU based on other polyols or based on polyol mixtures with a polycarbonate diol content of less than 70 mol%.

## Claims

1. Use of thermoplastic polyurethanes obtainable from the reaction of
A) at least one isocyanate component selected from the group consisting of aliphatic, cycloaliphatic and aromatic diisocyanates,
B) a polyol component consisting of
b1) 100 to 70 mol% of one or more polycarbonate diols having a number average molecular weight of 500 to 6000 g/mol,
b2) 0 to 30 mol% of at least one polyol selected from the group consisting of polyester diols, polyether diols, polycaprolactone diols and polyether carbonate diols having a number-average molecular weight of 500 to 8000 g/mol and
C) at least one chain extender component selected from the group consisting of short-chain diols, hydroxylamines and diamines having a number-average molecular weight of 62 to 490 g/mol,
D) optionally monofunctional chain terminators,
in the presence of
E) optionally catalysts,
F) 0.05% to 5% by weight, based on the thermoplastic polyurethane, of oxidation and light stabilizers,
G) optionally further additives and/or auxiliaries,
where the ratio of the isocyanate groups from A) to the isocyanate-reactive groups from B), C) and D) is 0.9:1 to 1.1:1,
for production of articles that are subject to soiling and scratching by virtue of their use and that have very little blocking of electronic signals and radio signals.

2. Use according to Claim 1, wherein
the polyol component (B) consists of
b1) 100 to 80 mol% of one or more polycarbonate diols having a number average molecular weight of 500 to 5000 g/mol,
b2) 0 to 20 mol% of at least one polyol selected from the group consisting of polyester diols, polyether diols, polycaprolactone diols and polyether carbonate diols having a number-average molecular weight of 500 to 6000 g/mol, and
at least one chain extender component (C) selected from the group consisting of short-chain diols, hydroxylamines and/or diamines having a number-average molecular weight of 62 to 400 g/mol is used.

3. Use according to Claim 1, wherein
the polyol component (B) consists of
b1) 100 to 90 mol% of one or more polycarbonate diols having a number average molecular weight of 600 to 4000 g/mol,
b2) 0 to 10 mol% of at least one polyol selected from the group consisting of polyester diols, polyether diols, polycaprolactone diols and polyether carbonate diols having a number-average molecular weight of 500 to 4000 g/mol, and
at least one chain extender component (C) selected from the group consisting of short-chain diols, hydroxylamines and diamines having a number-average molecular weight of 62 to 350 g/mol is used.

4. Use according to Claim 1, wherein
the polyol component (B) consists of
b1) 100 to 95 mol% of one or more polycarbonate diols having a number average molecular weight of 600 to 3500 g/mol,
b2) 0 to 5 mol% of at least one polyol selected from the group consisting of polyester diols, polyether diols, polycaprolactone diols and polyether carbonate diols having a number-average molecular weight of 650 to 2500 g/mol and
at least one chain extender component (C) selected from the group consisting of short-chain diols, hydroxylamines and diamines having a number-average molecular weight of 80 to 300 g/mol is used.

5. Use according to Claim 1, wherein
the polyol component (B) consists of
b1) one or more polycarbonate diols having a number-average molecular weight of 650 to 2500 g/mol, and
at least one chain extender component (C) selected from the group consisting of short-chain diols having a number-average molecular weight of 90 to 200 g/mol is used.

6. Use according to Claim 1, wherein
the polyol component (B) consists of
b1) one or more polycarbonate diols having a number-average molecular weight of 800 to 2500 g/mol, and
at least one chain extender component (C) selected from the group consisting of short-chain diols having a number-average molecular weight of 90 to 118 g/mol is used.

7. Use according to Claim 1 for production of everyday articles for the sports and leisure sector.

8. Use according to Claim 1 for production of housings, casings and shells of electronic devices, computers, notebooks, tablets, mobile phones, watches, wearables and fitness trackers.

9. Use according to Claim 1 for production of wristbands of watches, sports wearables and fitness trackers.

10. Use according to Claim 1 for production of installable parts and seat surfaces in the transport and home sector and in the sports and leisure sector.
